# EUROPEAN PATENT SPECIFICATION

(11) **EP 3 791 763 B1**
(45) Date of publication and mention of the grant of the patent: **30.08.2023**
(21) Application number: 20188809.6
(22) Date of filing: 31.07.2020
(51) Int. Cl.: A47J 31/44

(54) **COFFEE MACHINE EQUIPPED WITH MILK CARAFE**
KAFFEEMASCHINE MIT MILCHKARAFE
MACHINE À CAFÉ ÉQUIPÉE DE CARAFE À LAIT

(30) Priority: 10.09.2019 IT 201900016031
(43) Date of publication of application: 17.03.2021
(73) Proprietor: De'Longhi Appliances S.r.l., 31100 Treviso (IT)
(72) Inventor: MIATELLO, Dario, 31100 Treviso (IT)
(74) Representative: Rapisardi, Mariacristina

(56) References cited:
- WO-A1-2017/103709
- WO-A1-2017/198688
- WO-A1-2019/158458

## Description

The present invention relates to a coffee machine, comprising a machine body and a carafe comprising a milk container equipped with a cover inside which there is an integrated milk frother device.

The cover is removably connected to the machine body, and in particular a steam inlet channel of the milk frother device is removably fixed to a steam dispenser present in the machine body. See document WO 2017103709 A1.

The method commonly adopted for refilling the carafe from the top consists of pouring the milk into the container from an appropriate filling mouth afforded in the closing cover.

This filling method is not precisely controllable as the cover hinders the view of the level of milk present in the container.

There is therefore a risk of the milk overflowing during filling and therefore also dirtying other surfaces.

According to other known filling methods, to prevent this drawback the cover is first separated from the machine body and is then separated from the milk container.

In this case the filling may be more precise as the container has no cover and the latter cannot therefore hinder the view of the milk level, but it is undoubtedly more complex as it requires a longer series of operations.

The technical task of the present invention is, therefore, to provide a coffee machine with a milk carafe which obviates the above-described technical drawbacks of the prior art.

Within the context of this technical task, an object of the invention is to provide a coffee machine with a milk carafe that is easy to fill precisely after every emptying.

The technical task, as well as these and other objects according to the present invention are achieved by realising a coffee machine, as defined in claim 1.

Preferably, said milk frother device mounted in said cover comprises an inlet channel and said machine body comprises a steam-dispensing nozzle, said cover is removably fixed to said machine body by a removable engagement of said steam inlet channel with said steam-dispensing nozzle.

Advantageously, therefore, when said cover is fixed to said machine body, said container can be moved for opening and closing.

The present invention also discloses a carafe as defined in claim 14.

In an embodiment of the invention said filling mouth is delimited by the upper perimeter edge of said container.

In an embodiment of the invention at said opening position at least a majority of said filling mouth is positioned outside the border of said cover.

In an embodiment of the invention, said container is supported in a raised position above a front resting surface of cups of the coffee machine.

In an embodiment of the invention a releasable coupling means of said support to said cover is provided.

In an embodiment of the invention said support disengageably supports said container.

In an embodiment of the invention said support is configured to support a translation and/or rotation of said container.

The filling of the milk container is thus performed with extreme ease without having to detach either the carafe from the machine body or the cover from the container and in complete control given that the user observes the increasing level of milk in the container without any obstacles and stops at the desired level exactly without the risk of the milk overflowing from the container.

The filling operation is therefore easy, precise and clean.

The machine body preferably has a sensor means for detecting the presence of the carafe.

The machine body preferably also has a sensor means for detecting the position of the container and/or a sensor means for detecting the level of the milk present in the carafe.

In that case the machine dispensing cycle can only be activated if the presence of a carafe connected to the machine body is detected with the container closed and a suitable level of milk.

In this way it is possible to achieve the correct operation of the coffee machine as the dispensing of steam is prevented if the carafe is not connected to the machine body and/or if the container is not closed and/or if there is no milk or not enough milk in the milk container.

Other characteristics of the present invention are also defined in the following claims.

Further characteristics and advantages of the invention will more fully emerge from the description of preferred but not exclusive embodiments of the coffee machine with a milk carafe according to the invention, illustrated by way of indicative and non-limiting example in the accompanying drawings, in which:
figure 1 shows the front part of a coffee machine to the body of which a carafe is connected in compliance with a first embodiment of the invention in the closing configuration of the filling mouth;
figure 2 shows the front part of a coffee machine to the body of which the carafe of figure 1 is connected in the opening configuration of the filling mouth;
figure 3 shows the coffee machine of figure 1 in a closing configuration of the filling mouth;
figure 4 shows the carafe of figure 1 in an opening configuration of the filling mouth;
figure 5 is an exploded view of the carafe of figure 1;
figure 6 shows a vertical section of the carafe of figure 1;
figure 7 shows a carafe in compliance with a second embodiment of the invention in a closing configuration of the filling mouth;
figure 8 shows the carafe of figure 7 in an opening configuration of the filling mouth;
figure 9 is an exploded view of the carafe of figure 7;
figure 10 shows a carafe in compliance with a third embodiment of the invention in a closing configuration of the filling mouth;
figure 11 shows the carafe of figure 10 in an opening configuration of the filling mouth;
figure 12 is an exploded view of the carafe of figure 10.

Equivalent parts in the various embodiments of the carafe will be indicated with the same reference number.

With reference to the mentioned figures, a coffee machine is shown comprising a machine body 1 and a milk carafe 2.

In the machine body the essential operating components (not shown) of the coffee machine are installed and in particular the hydraulic circuit comprising at least one supply pump, at least one boiler, at least one infuser unit and at least one external steam dispensing nozzle.

The infuser unit, where a dose of loose or packaged coffee powder is loaded, which is subjected to infusion by the water supplied by the pump and heated by the boiler, communicates with an external coffee dispenser 3 positioned at a front wall 4 of the machine body 1 above a resting surface 5 of cups 6.

The carafe 2 comprises in turn a container 7 for the milk, a filling mouth 8 and a closing cover 9 for closing the filling mouth 8.

A milk frother device of the known type (not shown) is integrated into the cover 9. The milk frother device for example comprises a mixing chamber having an inlet channel for the inlet of the milk sucked by Venturi effect from the container 7, an inlet channel of the air sucked by Venturi effect from the external atmosphere, a steam inlet channel and a hot milk outlet channel with or without foam.

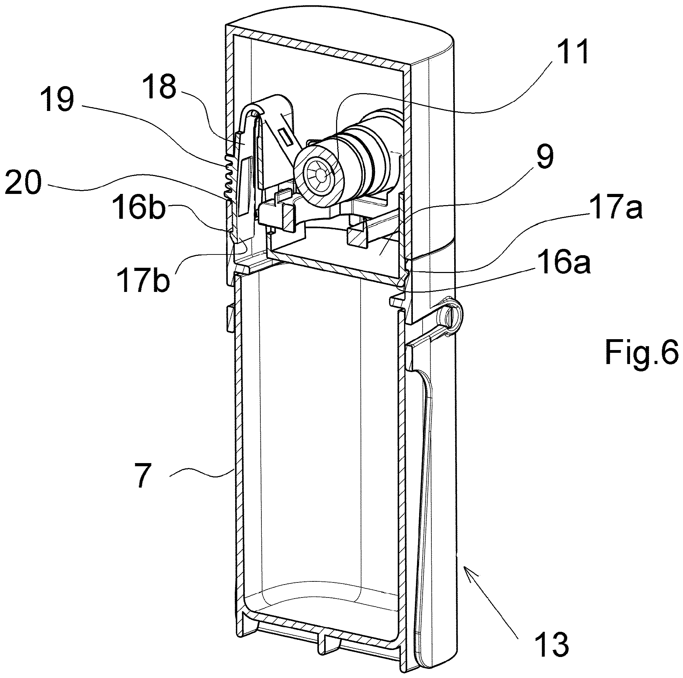

All the solutions show the inlet channel 10 of the milk sucked by Venturi effect from the container 7 and the outlet channel 12 of hot milk, which can be oriented or orientable towards the cup 6, whereas the steam inlet channel, although present in all the solutions, is only visible in figure 6 in relation to the first embodiment of the carafe 2.

The steam inlet channel in all the solutions is removably connectable to the steam dispensing nozzle (not shown) installed in the machine body 1.

Typically but not necessarily the steam dispensing nozzle is a horizontal nozzle projecting from the front wall 4 of the machine body 1 and the steam inlet channel opens in the wall of the cover 9 which faces the front wall 4 of the machine body 1. Advantageously, the cover 9 supports a support 13 of the container 7 configured to support a limited reversible movement of the container 7 towards an opening position of the filling mouth 8 for loading milk without disengaging the cover 9 from the machine body 1.

The filling mouth 8 is advantageously delimited by the upper perimeter edge 8a of the container 7 and is therefore very large so as to be able to perform quick and easy filling of the milk.

The filling is further facilitated by the fact that at the opening position at least most of the filling mouth 8 is positioned outside the border of the cover 9.

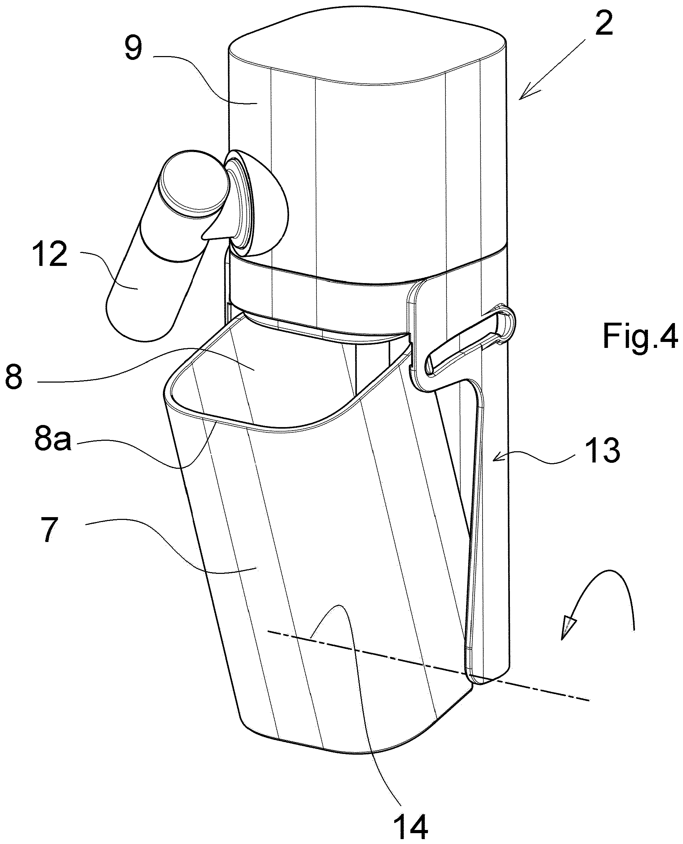

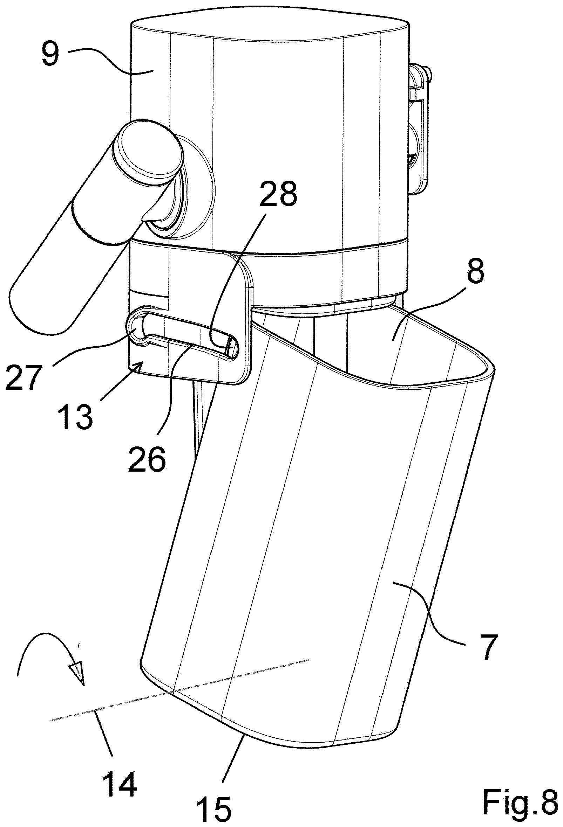

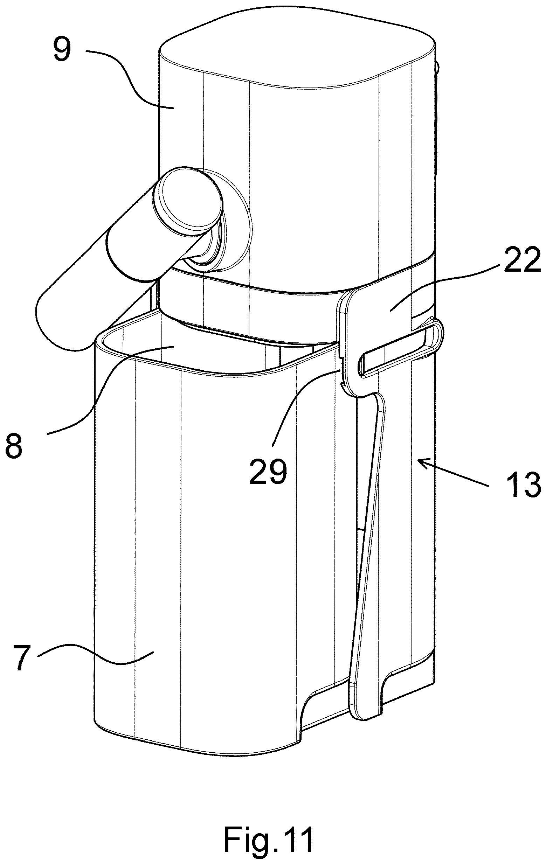

Figures 4, 8 and 11 clearly show that in the opening position of the container 7, with for example a quadrangular conformation, the filling mouth 8 is almost entirely exposed, in the particular case at least most of each of the three of its four corners is exposed.

In the use configuration of the coffee machine in which the carafe 2 is connected to the machine body 1, the container 7 is supported in a raised position above a resting surface 5 of cups 6.

This, as well as contributing to maintaining the hygienic conditions of the carafe which is far from the area that tends to get most dirty due to sprays of milk and coffee, is also used to prevent the container during its movement being able to interfere with the resting surface 5 of cups 6.

In fact, the support 13 is configured to support a movement of the container 7 that can consist of a translation and/or rotation.

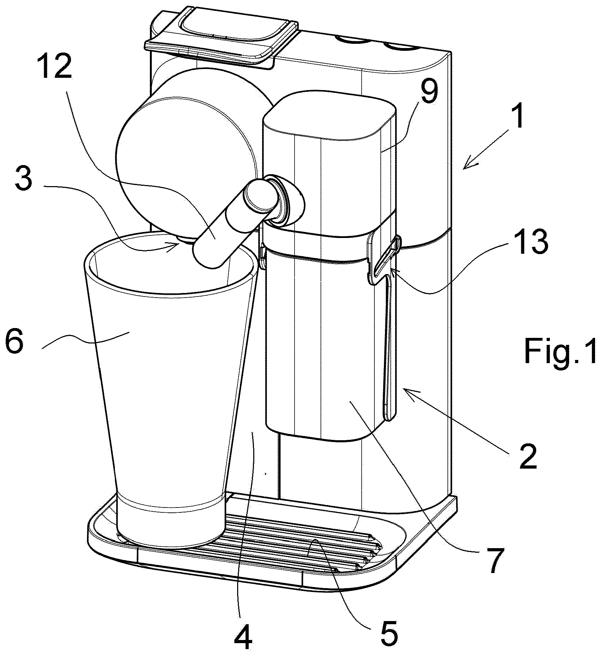

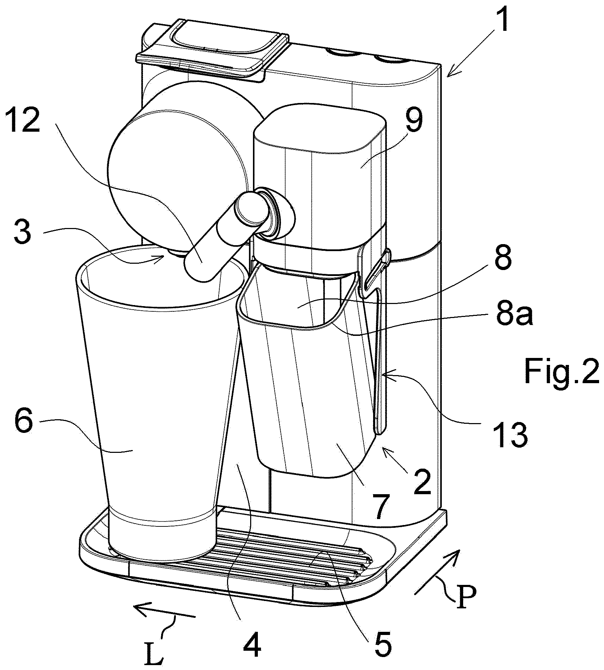

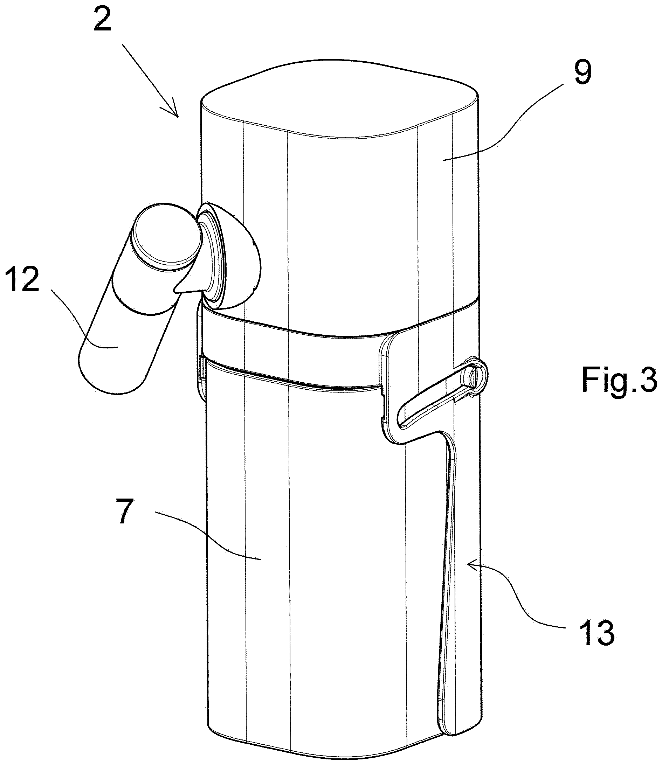

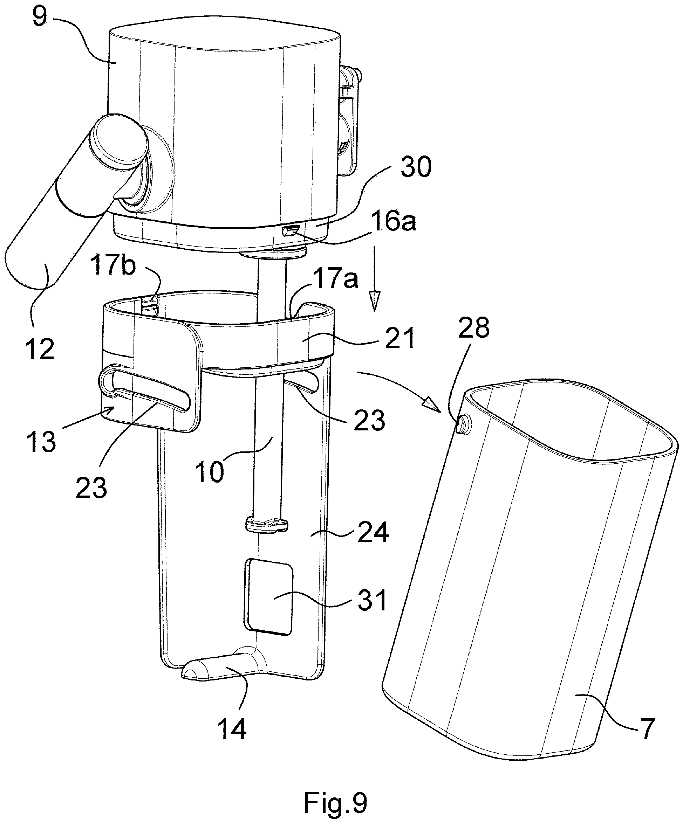

In the solutions illustrated by way of example in figures 1 - 9, the support 13 comprises a horizontal hinge axis 14 of the container 7.

The hinge axis 14 is positioned at a lower base 15 of the container 7.

In particular, the hinge axis 14 is positioned along a corner of the lower base 15 of the container 7.

In the case illustrated in figures 1 - 6 the horizontal hinge axis 14 of the container 7 extends in the direction L of the width of the coffee machine so that when opening the container moves forwards in the depth direction of the coffee machine.

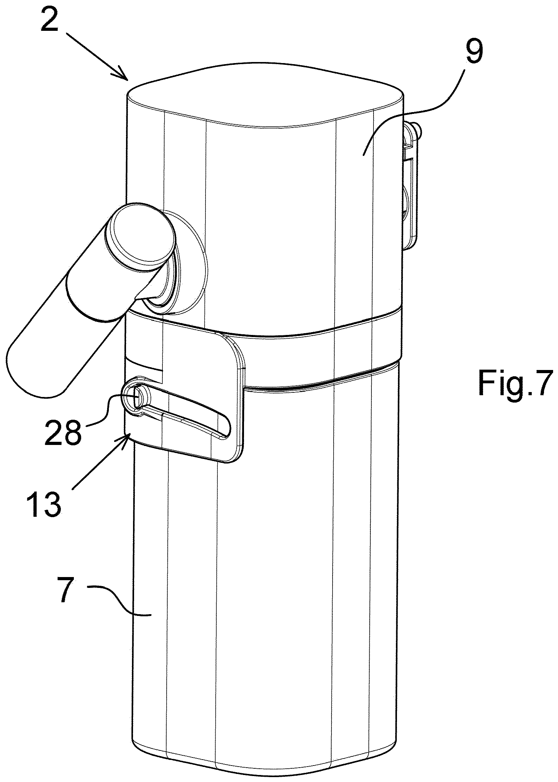

In the case illustrated in figures 7 - 9 the horizontal hinge axis 14 of the container 7 extends in the direction P of the depth of the coffee machine so that when opening the container moves forwards in the width direction of the coffee machine and away from the external coffee dispenser 3.

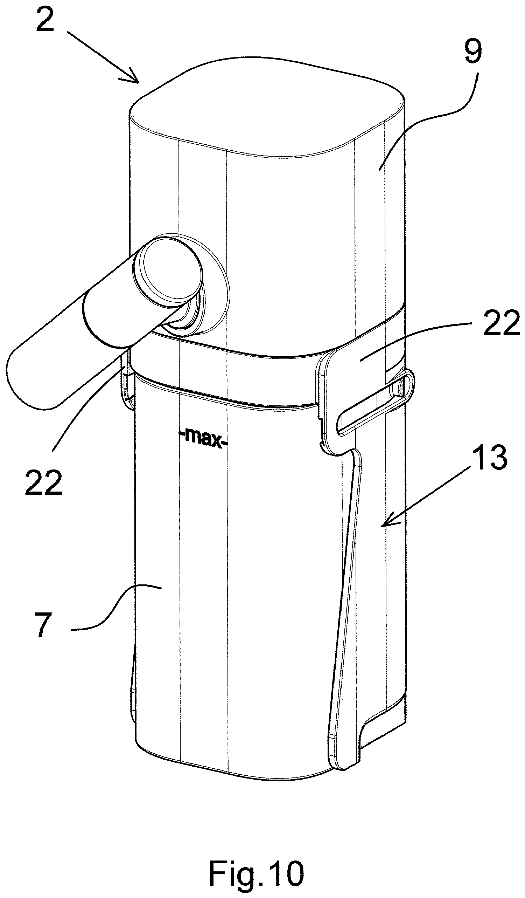

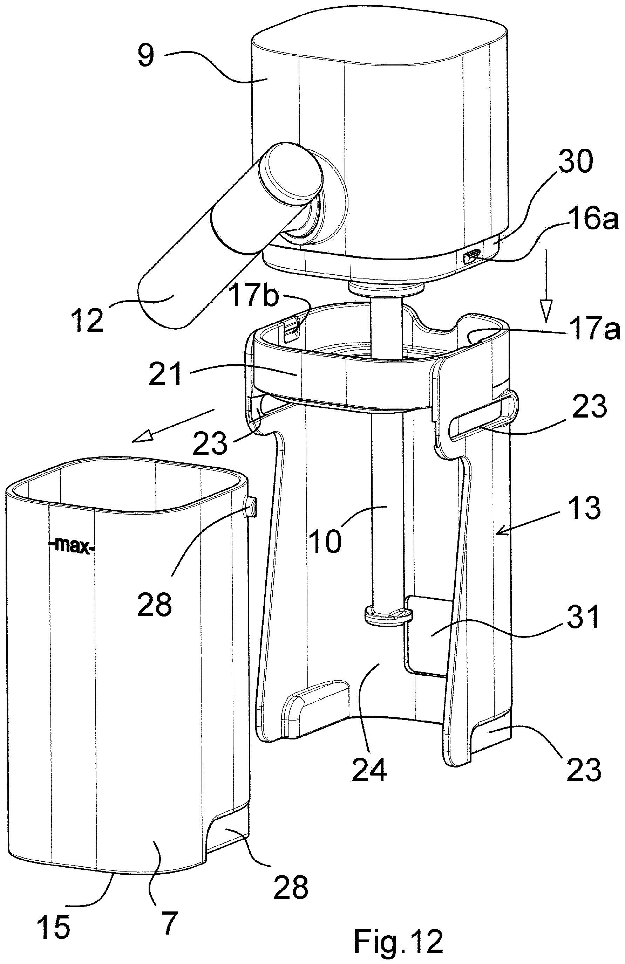

In the case illustrated in figures 10 - 12 the container 7 is supported in horizontal translation in the direction P of the depth of the coffee machine and when opening it moves forwards.

In other solutions it is possible to provide an inclined axis of rotation or an inclined axis of translation for the container 7.

Advantageously, a releasable coupling means of the support 13 to the cover 9 is provided, for example but not necessarily teeth 16a, 16b engageable in corresponding snap fit seats 17a, 17b.

The teeth 16a, 16b can be positioned on an outer wall of the cover 9 whereas the snap fit seats 17a, 17b can be positioned on an inner wall of the support 13.

As shown in figure 6, at least one tooth 16b can be supported by an elastically yielding lever 18 housed inside the cover 9 and having a manual activation grip 19 accessible from the outside by means of a window 20 for the disengagement of the tooth 16b from its snap fit seat 17b and therefore for the separation of the cover 9 from the support 13.

Advantageously, the support 13 in turn disengageably supports the container 7. The support 13 partially embraces the outer walls of the container 7.

The support 13 comprises an upper attachment collar 21 for attaching the cover and a vertical wing 24 that extends below the collar 21.

The teeth 16a, 16b can be positioned on a lowered bottom outer perimeter wall 30 of the cover 9 whereas the snap fit seats 17a, 17b can be positioned on the inner wall of the collar 21 that is fitted onto the lowered bottom outer perimeter wall 30 of the cover 9.

The carafe 2 further comprises one or more movement guides 23, 28 of the container 7, in particular rotation guides in the solutions illustrated in figures 1 - 9 and translation guides in the solution illustrated in figures 10 - 12.

Each guide 23, 28 is formed by a fixed part 23 solidly constrained to the support 13 and a movable part 28 solidly constrained to the container 7 and engaging slidably with the fixed part 23.

Reference is made to the solutions illustrated in figures 1 - 9.

Rotation guides are provided, each formed by a longitudinal slot 23 afforded on the support 13 in which a pin 28 is slidably engaged, projecting from the outer wall of the container 7.

The vertical wing 24 of the support 13 has the hinge axis 14 at the bottom.

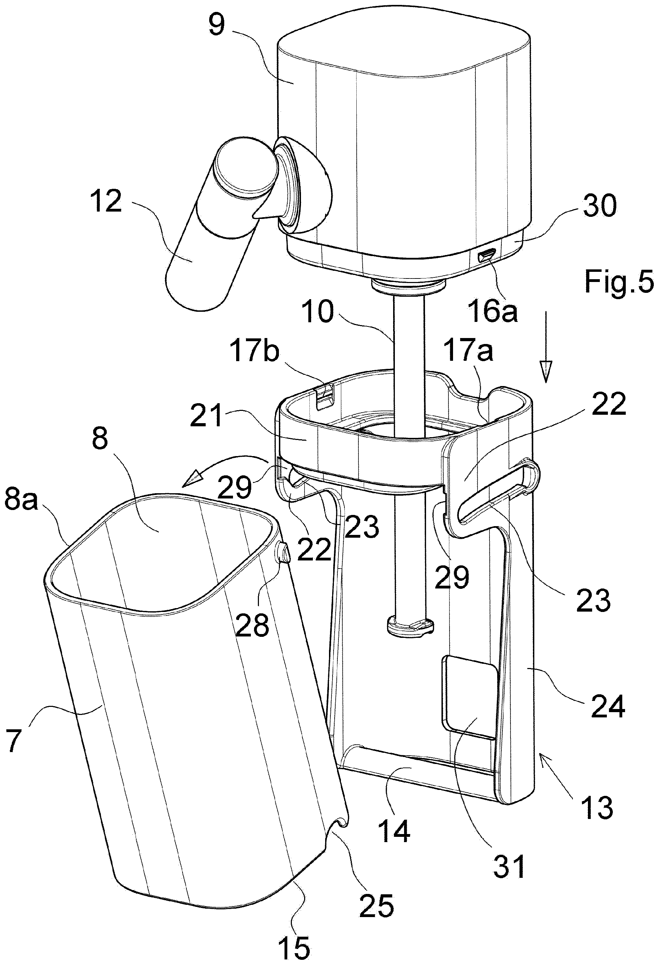

The lower base 15 of the container 7 externally has a groove, only visible in figure 5, where it has been indicated with reference number 25 but also present in the second embodiment of the carafe 2, conjugated to the hinge axis 14.

The longitudinal slots 23 extend along opposing walls 22 of the vertical wing 24. Each slot 23 has in particular a sliding stretch of the pin 28 that extends along an arch centred on the hinge axis 14 and an eccentric locking stretch of the pin 28 in the closing position of the container 7.

Each of the opposing walls 22 of the vertical wing 24 of the support 13 can have in the direction of its thickness a guide 29 that guides the introduction into and the extraction of the pin 28 out of the slot 23, as illustrated in figure 5.

For coupling the container 7 to the support 13 the groove 25 is pointed against the hinge axis 14 which by acting as a pivot guides the rotation of the container 7.

Initially, the container 7 turns freely, then it is forced to be engaged in the support 13 when the pins 28 are engaged against the opposing walls 22 of the vertical wing 24 of the support 13 which bend slightly to allow the snap fit insertion of the pins 28 into the slots 23.

The uncoupling of the container 7 from the support 13 takes place with a reverse operation.

Reference is made to the solution illustrated in figures 10 - 12.

Upper and lower translation guides are provided.

The upper translation guides are each formed by an upper horizontal rectilinear slot 23 of the vertical wing 24 in which a pin 28 is slidably engaged, projecting from the outer wall of the container 7.

The lower translation guides are each formed by a lower internal horizontal projection 23 of the vertical wing 24 in which a horizontal recess 28 of the outer wall of the container 7 is slidably engaged.

The lower translation guides are preferably at the level of the base 15 of the container 7.

Each of the opposing walls 22 of the vertical wing 24 of the support 13 can have in the direction of its thickness a guide 29 that guides the introduction into and the extraction of the pin 28 out of the slot 23.

For coupling the container 7 to the support 13 the fixed and movable parts of the upper and lower translation guides are aligned horizontally and a horizontal thrust is exercised on the container 7 so that the pins 28, after slightly bending the opposing walls 22 of the vertical wing 24 of the support 13, are inserted by snap fitting into the corresponding slots 23 and at the same time the projections 23 are inserted into the corresponding recesses 28.

The uncoupling of the container 7 from the support 13 takes place with a reverse operation.

Reference is now made again to all the solutions shown.

Advantageously, the machine body 1 can have a sensor means for detecting the presence of the carafe 2 and/or a sensor means for detecting the position of the container 7 and/or a sensor means for detecting the level of milk present in the carafe 2.

Preferably, a carafe presence sensor means, a container position sensor means and a level sensor means are provided which, in combination, contribute to the safe operation of the coffee machine.

In fact, the sensor means (not shown) is connected to the control unit of the coffee machine and handles the start of the milk preparation cycle.

For example, the start of the milk preparation cycle is hampered if the absence of the carafe or the open position of the container or the absence of milk or the presence thereof in an insufficient quantity are detected.

On this point, the sensor means for detecting the position of the container 7 can comprise dedicated proximity sensors, whereas the sensor means for detecting the presence of the carafe 2 and the level of the milk can also be infrared sensors which, to be able to operate, require a carafe with at least one transparent area of the container.

In particular, the infrared sensors are placed on the front wall 4 of the machine body 2 also at a distance from the support surface 5 so as to be substantially placed in proximity to the bottom of the container 7.

In more detail, the infrared sensors comprise at least a first emitting sensor and a second receiving sensor facing a window 31 of the support 13.

When the carafe is full of milk, the milk reflects its infrared rays so that they can be used as desired to detect the presence or absence of milk and presence or absence of the carafe.

In practice the materials used, as well as the dimensions, can be any according to the needs and the state of the art.

## Claims

1. A coffee machine, comprising a machine body (1) and a carafe (2) comprising a milk container (7), a filling mouth (8), and a closing cover (9) of said filling mouth (8) equipped with a milk frother device and removably fixed to said machine body (1), **characterized in that** said cover (9) supports a support (13) of said container (7) configured to support a limited reversible movement of said container (7) towards an opening position of said filling mouth (8) for loading the milk without disengaging said cover (9) from said machine body (1), **in that** said milk container (7) has an open top defining said filling mouth (8), and **in that** along said limited reversible movement said milk container (7) takes an inital position where said cover (9) covers said open top and said opening position where said cover (9) uncovers said open top.

2. The coffee machine according to the previous claim, **characterised in that** said milk frother device mounted in said cover comprises an inlet channel and said machine body comprises a steam-dispensing nozzle, and **in that** said cover is removably fixed to said machine body by a removable engaging of said steam inlet channel with said steam-dispensing nozzle.

3. The coffee machine according to any one preceding claim, **characterised in that** at said opening position at least a majority of said filling mouth (8) is positioned outside the border of said cover (9).

4. The coffee machine according to any one preceding claim, **characterised in that** said container (7) is supported in a raised position above a front resting surface (5) of cups (6) of the coffee machine.

5. The coffee machine according to any one preceding claim, **characterised in that** it comprises releasable coupling means of said support (13) to said cover (9).

6. The coffee machine according to any one preceding claim, **characterised in that** said support (13) disengageably supports said container (7).

7. The coffee machine according to any one preceding claim, **characterised in that** said machine body (1) has sensor means for detecting the presence of said carafe (2) and/or sensor means for detecting the position of said container and/or sensor means for detecting the level of the milk present in said carafe (2).

8. The coffee machine according to any one preceding claim, **characterised in that** said support (13) is configured to support a translation and/or a rotation of said container (7).

9. The coffee machine according to the preceding claim, **characterised in that** said support (13) comprises a hinge axis (14) of said container (7).

10. The coffee machine according to the preceding claim, **characterised in that** said hinge axis (14) is positioned at a lower base (15) of said container (7).

11. The coffee machine according to claim 10, **characterised in that** said lower base (15) of said container (7) externally has a groove (25) mated to said hinge axis (14).

12. The coffee machine according to any one preceding claim, **characterised in that** said support (13) embraces the outside walls of said container (7).

13. The coffee machine according to the preceding claim, **characterised in that** said support (13) comprises an attachment collar (21) for attaching the cover and a vertical wing (24) having respective movement guides for the container (7), said movement guides comprising straight guide slots in translation or arched guide slots in rotation.

14. A carafe (2) comprising a milk container (7), a filling mouth (8), and a closing cover (9) of said filling mouth (8) equipped with a milk frother device, wherein said cover (9) is configured to be removably fixed to a machine body (1), **characterized in that** said cover (9) supports a support (13) of said container (7) configured to support a limited reversible movement of said container (7) towards an opening position of said filling mouth (8) for loading the milk without disengaging said cover (9) from the machine body (1), **in that** said milk container (7) has an open top defining said filling mouth (8), and **in that** along said limited reversible movement said milk container (7) takes an initial position where said cover (9) covers said open top and said opening position where said cover (9) uncovers said open top .

## Patentansprüche

1. Kaffeemaschine mit einem Maschinenkörper (1) und einer Karaffe (2), die einen Milchbehälter (7), eine Einfüllöffnung (8) und eine Abdeckung (9) der Einfüllöffnung (8) umfasst, die mit einer Milchaufschäumvorrichtung ausgestattet und abnehmbar an dem Maschinenkörper (1) befestigt ist **dadurch gekennzeichnet, dass** die Abdeckung (9) eine Stütze (13) die Milchbehälter (7) trägt, die so konfiguriert ist, dass sie eine begrenzte reversible Bewegung die Milchbehälter (7) in Richtung einer Öffnungsposition der Einfüllöffnung (8) zum Einfüllen der Milch unterstützt, ohne die Abdeckung (9) von dem Maschinenkörper (1) zu lösen, dass der Milchbehälter (7) eine offene Oberseite hat, die die Einfüllöffnung (8) definiert, und dass der Milchbehälter (7) entlang der begrenzten reversiblen Bewegung eine Anfangsposition einnimmt, in der die Abdeckung (9) die offene Oberseite abdeckt, und die Öffnungsposition, in der die Abdeckung (9) die offene Oberseite freilegt.

2. Kaffeemaschine nach dem vorhergehenden Anspruch, **dadurch gekennzeichnet, dass** die in der Abdeckung angebrachte Milchaufschäumvorrichtung einen Einlasskanal und der Maschinenkörper eine Dampfabgabedüse umfasst, und dass die Abdeckung durch einen lösbaren Eingriff des Dampfeinlasskanals mit der Dampfabgabedüse abnehmbar an dem Maschinenkörper befestigt ist.

3. Kaffeemaschine nach einem der vorhergehenden Ansprüche, **dadurch gekennzeichnet, dass** in der Öffnungsposition mindestens ein Großteil der Einfüllöffnung (8) außerhalb des Abdeckung (9) angeordnet ist.

4. Kaffeemaschine nach einem der vorhergehenden Ansprüche, **dadurch gekennzeichnet, dass** der Behälter (7) in einer angehobenen Position über einer vorderen Ablagefläche (5) von Tassen (6) der Kaffeemaschine gehalten wird.

5. Kaffeemaschine nach einem der vorhergehenden Ansprüche, **dadurch gekennzeichnet, dass** sie lösbare Verbindungsmittel zwischen dem Träger (13) und dem Abdeckung (9) aufweist.

6. Kaffeemaschine nach einem der vorhergehenden Ansprüche, **dadurch gekennzeichnet, dass** der Träger (13) den Behälter (7) lösbar trägt.

7. Kaffeemaschine nach einem der vorhergehenden Ansprüche, **dadurch gekennzeichnet, dass** der Maschinenkörper (1) Sensormittel zum Erfassen des Vorhandenseins der Karaffe (2) und/oder Sensormittel zum Erfassen der Position die Milchbehälter und/oder Sensormittel zum Erfassen des Niveaus der in der Karaffe (2) vorhandenen Milch aufweist.

8. Kaffeemaschine nach einem der vorhergehenden Ansprüche, **dadurch gekennzeichnet, dass** der Träger (13) so konfiguriert ist, dass er eine Verschiebung und/oder eine Drehung die Milchbehälter (7) unterstützt.

9. Kaffeemaschine nach dem vorhergehenden Anspruch, **dadurch gekennzeichnet, dass** der Träger (13) eine Scharnierachse (14) die Milchbehälter (7) umfasst.

10. Kaffeemaschine nach dem vorhergehenden Anspruch, **dadurch gekennzeichnet, dass** die Scharnierachse (14) an einer unteren Basis (15) die Milchbehälter (7) angeordnet ist.

11. Kaffeemaschine nach Anspruch 10, **dadurch gekennzeichnet, dass** die untere Basis (15) die Milchbehälter (7) außen eine Nut (25) aufweist, die mit der Scharnierachse (14) zusammenpasst.

12. Kaffeemaschine nach einem der vorhergehenden Ansprüche, **dadurch gekennzeichnet, dass** die Träger (13) die Außenwände die Milchbehälter (7) umgreift.

13. Kaffeemaschine nach dem vorhergehenden Anspruch, **dadurch gekennzeichnet, dass** der Träger (13) einen Befestigungskragen (21) zur Befestigung des Deckels und einen vertikalen Flügel (24) mit entsprechenden Bewegungsführungen für den Behälter (7) umfasst, wobei die Bewegungsführungen gerade Führungsschlitze bei Translation oder gebogene Führungsschlitze bei Rotation umfassen.

14. Karaffe (2) mit einem Milchbehälter (7), einer Einfüllöffnung (8) und einer Abdeckung (9) der Einfüllöffnung (8), die mit einer Milchaufschäumvorrichtung ausgestattet ist, wobei die Abdeckung (9) so konfiguriert ist, dass sie abnehmbar an einem Maschinenkörper (1) befestigt werden kann, **dadurch gekennzeichnet, dass** die Abdeckung (9) eine Träger (13) die Milchbehälter (7) trägt, die so konfiguriert ist, dass sie eine begrenzte reversible Bewegung die Milchbehälter (7) in Richtung einer Öffnungsposition der Einfüllöffnung (8) zum Einfüllen der Milch unterstützt, ohne die Abdeckung (9) vom Maschinenkörper (1) zu lösen, dass der Milchbehälter (7) eine offene Oberseite aufweist, die die Einfüllöffnung (8) definiert, und dass der Milchbehälter (7) entlang der begrenzten reversiblen Bewegung eine Ausgangsposition einnimmt, in der die Abdeckung (9) die offene Oberseite abdeckt, und die Öffnungsposition, in der die Abdeckung (9) die offene Oberseite freilegt.

## Revendications

1. Machine à café, comprenant un corps de machine (1) et une carafe (2) comprenant un récipient à lait (7), une bouche de remplissage (8), et un couvercle de fermeture (9) de ladite bouche de remplissage (8) équipé d'un dispositif de moussage du lait et fixé de manière amovible audit corps de machine (1), **caractérisé en ce que** ledit couvercle (9) supporte un support (13) dudit récipient (7) configuré pour supporter un mouvement réversible limité dudit récipient (7) vers une position d'ouverture de ladite bouche de remplissage (8) pour charger le lait sans désengager ledit couvercle (9) dudit corps de machine (1), **en ce que** ledit récipient à lait (7) a un sommet ouvert définissant ladite bouche de remplissage (8), et **en ce que** le long dudit mouvement réversible limité, ledit récipient à lait (7) prend une position initiale où ledit couvercle (9) couvre ledit sommet ouvert et ladite position d'ouverture où ledit couvercle (9) découvre ledit sommet ouvert.

2. La machine à café selon la revendication précédente, **caractérisée par le fait que** le dispositif de moussage du lait monté dans le couvercle comprend un canal d'entrée et que le corps de la machine comprend une buse de distribution de vapeur, et **par le fait que** le couvercle est fixé de manière amovible au corps de la machine par un engagement amovible du canal d'entrée de la vapeur avec la buse de distribution de la vapeur.

3. La machine à café selon l'une des revendications précédentes, **caractérisée par le fait que** dans ladite position d'ouverture, au moins une majorité de ladite bouche de remplissage (8) est positionnée à l'extérieur du bord dudit couvercle (9).

4. La machine à café selon l'une des revendications précédentes, **caractérisée par le fait que** ledit récipient (7) est soutenu dans une position surélevée au-dessus d'une surface d'appui avant (5) des tasses (6) de la machine à café.

5. La machine à café selon l'une quelconque des revendications précédentes, **caractérisée en ce qu'**elle comprend des moyens d'accouplement amovibles dudit support (13) audit couvercle (9).

6. La machine à café selon l'une quelconque des revendications précédentes, **caractérisée par le fait que** ledit support (13) soutient de manière désengageable ledit récipient (7).

7. La machine à café selon l'une quelconque des revendications précédentes, **caractérisée par le fait que** ledit corps de machine (1) comporte des moyens de détection de la présence de ladite carafe (2) et/ou des moyens de détection de la position dudit récipient et/ou des moyens de détection du niveau du lait présent dans ladite carafe (2).

8. La machine à café selon l'une quelconque des revendications précédentes, **caractérisée en ce que** ledit support (13) est configuré pour supporter une translation et/ou une rotation dudit récipient (7).

9. La machine à café selon la revendication précédente, **caractérisée en ce que** ledit support (13) comprend un axe de charnière (14) dudit récipient (7).

10. La machine à café selon la revendication précédente, **caractérisée en ce que** ledit axe de charnière (14) est positionné à une base inférieure (15) dudit récipient (7).

11. Machine à café selon la revendication 10, **caractérisée par le fait que** la base inférieure (15) du récipient (7) présente extérieurement une rainure (25) reliée à l'axe de la charnière (14).

12. La machine à café selon l'une quelconque des revendications précédentes, **caractérisée en ce que** ledit support (13) embrasse les parois extérieures dudit récipient (7).

13. La machine à café selon la revendication précédente, **caractérisée en ce que** ledit support (13) comprend un collier de fixation (21) pour fixer le couvercle et une aile verticale (24) ayant des guides de mouvement respectifs pour le récipient (7), lesdits guides de mouvement comprenant des fentes de guidage droites en translation ou des fentes de guidage arquées en rotation.

14. Carafe (2) comprenant un récipient à lait (7), une bouche de remplissage (8) et un couvercle de fermeture (9) de ladite bouche de remplissage (8) équipé d'un dispositif de moussage du lait, dans lequel ledit couvercle (9) est configuré pour être fixé de manière amovible à un corps de machine (1), **caractérisé en ce que** ledit couvercle (9) supporte un support (13) dudit récipient (7) configuré pour supporter un mouvement réversible limité dudit récipient (7) vers une position d'ouverture de ladite bouche de remplissage (8) pour charger le lait sans désengager ledit couvercle (9) du corps de la machine (1), **en ce que** ledit récipient à lait (7) a un sommet ouvert définissant ladite bouche de remplissage (8), et **en ce que** le long dudit mouvement réversible limité, ledit récipient à lait (7) prend une position initiale où ledit couvercle (9) couvre ledit sommet ouvert et ladite position d'ouverture où ledit couvercle (9) découvre ledit sommet ouvert .
